# FASCICULE DE BREVET EUROPEEN

(11) **EP 2 644 505 B1**
(45) Date de publication et mention de la délivrance du brevet: **18.05.2016**
(21) Numéro de dépôt: 13160750.9
(22) Date de dépôt: 25.03.2013
(51) Int. Cl.: B64D 29/02, B64D 29/06, B64D 45/00, B64D 33/04

(54) **Carénage aérodynamique arrière à tenue en température améliorée pour mât d'accrochage d'ensemble propulsif d'aéronef**
Aerodynamische Heckverkleidung mit verbesserter Temperaturresistenz für Ausleger einer Antriebseinheit eines Luftfahrzeugs
Rear aerodynamic fairing with improved temperature resistance for a pylon of an aircraft propulsion unit

(30) Priorité: 27.03.2012 FR 1252745
(43) Date de publication de la demande: 02.10.2013
(73) Titulaire: Airbus Operations (Société par actions simplifiée), 31060 Toulouse (FR)
(72) Inventeur: Raison, Fabien, 31830 Plaisance du Touch (FR); Romani, Stéphane, 31400 Toulouse (FR); Bel, Laurent, 31150 Gagnac sur Garonne (FR)
(74) Mandataire: Augarde, Eric

(56) Documents cités:
- EP-A2- 0 867 366
- FR-A1- 2 913 665
- US-A- 4 712 750
- US-A1- 2003 201 366

## Description

### DOMAINE TECHNIQUE

La présente invention se rapporte au domaine des mâts d'accrochage de moteur d'aéronef et concerne plus précisément l'amélioration de la tenue en température d'un carénage aérodynamique arrière d'un tel mât d'accrochage.

Ce type de mât d'accrochage, également dénommé « EMS » (de l'anglais « Engine Mounting Structure »), permet de suspendre un moteur au-dessous de la voilure de l'aéronef, de monter ce moteur au-dessus de cette même voilure, ou encore de rapporter ce moteur en partie arrière du fuselage de l'aéronef.

L'invention peut être utilisée sur tout type d'aéronef équipé de turboréacteurs ou de turbopropulseurs, ou encore de tout autre type de turbomoteur.

### ÉTAT DE LA TECHNIQUE ANTÉRIEURE

Un mât d'accrochage est en général prévu pour constituer l'interface de liaison entre un turbomoteur et une voilure d'aéronef. Il permet de transmettre à la structure de l'aéronef les efforts générés par son moteur associé, et autorise également le cheminement du carburant, des systèmes électriques, hydrauliques, et air entre le moteur et l'aéronef.

Afin d'assurer la transmission des efforts, le mât d'accrochage comporte une structure rigide également dénommée structure primaire, habituellement du type « caisson », c'est-à-dire formée par l'assemblage de longerons supérieurs et inférieurs et de panneaux latéraux raccordés entre eux par l'intermédiaire de nervures transversales de rigidification.

D'autre part, le dispositif est muni de moyens d'accrochage interposés entre le moteur et la structure rigide, ces moyens comportant habituellement deux attaches, couramment appelées attaches moteur, ainsi qu'un dispositif de reprise des efforts de poussée générés par le moteur.

D'une manière analogue, le mât d'accrochage comporte en général une autre série d'attaches constituant un système de montage interposé entre la structure rigide et la voilure de l'aéronef, ce système étant habituellement composé de deux ou trois attaches.

Par ailleurs, un tel mât est pourvu d'une pluralité de structures secondaires assurant la ségrégation et le maintien des systèmes tout en supportant des éléments de carénage aérodynamiques, ces derniers prenant généralement la forme d'assemblages de panneaux rapportés sur ces structures. De façon connue de l'homme du métier, les structures secondaires se différencient de la structure rigide par le fait qu'elles ne sont pas destinées à assurer le transfert des efforts provenant du moteur et devant être transmis à la voilure de l'aéronef.

Parmi les structures secondaires, on compte le carénage aérodynamique arrière, également dénommé *« APF »* (de l'anglais « *Aft Pylon Fairing »),* qui assure une pluralité de fonctions parmi lesquelles on note la formation d'une barrière thermique ou anti-feu, et la formation d'une continuité aérodynamique entre la sortie du moteur et le mât d'accrochage. Le carénage adopte une position inférieure lorsque le moteur est destiné à être placé sous l'aile, et adopte une position supérieure lorsque le moteur est destiné à être placé au-dessus de l'aile. Un exemple de carénage connu de l'art antérieur est divulgué dans le document EP 2 190 739.

Un autre exemple est divulgué dans le document FR 2 913 665, qui est considéré comme l'art antérieur le plus proche et décrit les caractéristiques du préambule de la revendication 1.

Ce carénage aérodynamique arrière prend généralement la forme d'une structure de caisson comprenant deux panneaux latéraux assemblés entre eux par des nervures intérieures transversales de rigidification espacées les unes des autres selon une direction longitudinale du carénage, ainsi qu'un plancher de protection thermique qui est en général fixé à la structure de caisson par éclissage. Il est précisé que la structure de caisson n'est habituellement pas fermée à l'opposé du plancher de protection thermique, à savoir en partie supérieure lorsque le moteur est destiné à être suspendu sous la voilure de l'aéronef, étant donné que c'est à cet endroit que cette structure vient se raccorder sur les autres structures du mât, en particulier sur la structure aérodynamique arrière, dite *RSS,* d'après la terminologie anglaise « *Rear Secondary Structure ».* Néanmoins, un longeron de fermeture de la structure de caisson peut toutefois être prévu à l'opposé du plancher de protection thermique.

Les panneaux latéraux de la structure aérodynamique arrière et du carénage aérodynamique arrière, qui se situent dans la continuité les uns des autres, sont prévus pour être épousés extérieurement par un flux d'air froid, tel que le flux secondaire du moteur lorsque ce dernier est un turboréacteur à double flux, en raison de l'implantation de ces panneaux latéraux dans le canal annulaire de flux secondaire du moteur et/ou en sortie de ce canal.

Le plancher de protection thermique présente quant-à lui une face externe prévue pour être épousée par un flux chaud de gaz de combustion du moteur, également dénommés gaz d'échappement, pouvant atteindre des températures de l'ordre de 540°C, ces températures tendant à augmenter avec les récents développements des techniques mises en oeuvre dans les turboréacteurs. Des températures atteignant 750°C environ sont ainsi envisagées dans certains turbomoteurs d'aéronef en cours de développement.

Cette augmentation de température des gaz de combustion pose de nombreux problèmes à l'égard notamment de !a résistance thermique des matériaux formant le plancher de protection thermique et de la dilatation thermique différentielle de ces matériaux par rapport aux matériaux constituant la structure de caisson du carénage.

L'accroissement de la dilation thermique différentielle de ces matériaux se traduit en particulier par une augmentation des contraintes mécaniques subies par les dispositifs d'éclissage de ce plancher à la structure de caisson précitée.

### EXPOSÉ DE L'INVENTION

L'invention a notamment pour but d'apporter une solution simple, économique et efficace à ces problèmes, permettant d'éviter au moins en partie les inconvénients précités.

Elle propose à cet effet un carénage aérodynamique arrière pour mât d'accrochage d'ensemble propulsif d'aéronef, comprenant une structure de caisson, un plancher de protection thermique pourvu d'une surface extérieure destinée à être épousée par un flux de gaz de combustion issu d'un turbomoteur dudit ensemble propulsif, ainsi que des moyens de support de ce plancher qui comprennent des moyens de liaison de deux bords latéraux de ce plancher à la structure de caisson.

Selon l'invention, lesdits moyens de liaison de chaque bord latéral du plancher sont configurés de manière à autoriser un déplacement relatif en translation dudit bord latéral du plancher par rapport à la structure de caisson selon une direction correspondante s'inscrivant dans un plan orthogonal à une direction longitudinale du carénage.

Par « direction longitudinale du carénage », il faut comprendre une direction globalement parallèle à la direction d'avancement d'un aéronef équipé dudit ensemble propulsif, et donc aussi à un axe longitudinal de cet ensemble propulsif.

Le plan orthogonal à cette direction longitudinale est ainsi assimilable à un plan transversal du carénage.

La structure de caisson précitée comporte typiquement des éléments intérieurs de rigidification ainsi que deux panneaux latéraux raccordés à ces éléments intérieurs, d'une manière bien connue.

Les moyens de liaison de chaque bord latéral du plancher à la structure de caisson du carénage constituent une liaison glissière selon la direction précitée qui, pour cette raison, est dénommée direction principale de glissière dans ce qui suit.

Cette liaison permet de réduire considérablement les contraintes induites par la dilatation thermique différentielle, selon cette direction principale de glissière, des matériaux formant le plancher de protection thermique par rapport aux matériaux constituant la structure de caisson du carénage. En effet, des déformations relatives du plancher par rapport à la structure de caisson, notamment du fait de dilatations différentielles, peuvent se traduire par un déplacement libre en translation des bords du plancher par rapport à la structure de caisson selon la direction principale de glissière, au lieu de se traduire par des efforts appliqués à des moyens de fixation par éclissage de type boulons ou rivets utilisés dans l'art antérieur.

Il est à noter que les éléments intérieurs de rigidification précités prennent par exemple la forme de nervures transversales, d'une manière connue en soi.

Lesdits moyens de liaison sont de préférence configurés de manière à autoriser en outre un déplacement relatif en translation de chacun desdits bords latéraux du plancher par rapport à la structure de caisson selon une direction longitudinale du plancher.

Les moyens de liaison de chaque bord latéral du plancher constituent ainsi également une liaison glissière selon la direction longitudinale du plancher qui, pour cette raison, est dénommée direction secondaire de glissière dans ce qui suit.

Cette caractéristique permet de réduire les contraintes induites par la dilatation thermique différentielle, selon cette direction secondaire de glissière, des matériaux formant le plancher par rapport aux matériaux constituant la structure de caisson.

Dans un mode de réalisation préféré de l'invention, lesdits moyens de liaison de chaque bord latéral du plancher comprennent une gorge latérale correspondante solidaire d'un premier élément parmi la structure de caisson et le plancher et s'étendant de l'avant vers l'arrière le long de ce premier élément en étant ouverte dans ladite direction principale de glissière correspondante, ainsi qu'une languette latérale correspondante solidaire du second élément parmi la structure de caisson et le plancher, et s'étendant de l'avant vers l'arrière le long de ce second élément en étant engagée dans la gorge précitée de manière à assurer le support dudit plancher.

Il est à noter que chaque gorge latérale précitée est de préférence continue le long dudit premier élément, mais peut en variante être formées de plusieurs portions séparées se prolongeant mutuellement.

Chaque languette latérale précitée présente de préférence une section transversale conjuguée de la section transversale de la gorge latérale correspondante, de sorte que le montage de la languette dans la gorge est sensiblement ajusté selon une direction transversale perpendiculaire à la direction principale de glissière. Par direction transversale, il faut bien entendu comprendre une direction s'inscrivant dans un plan transversal, c'est-à-dire un plan orthogonal à la direction longitudinale du carénage.

Dans le mode de réalisation préféré de l'invention, l'étendue transversale dudit plancher, ainsi que l'écartement entre des fonds respectifs des deux gorges latérales appartenant respectivement aux moyens de liaison desdits bords du plancher, se réduisent de l'avant vers l'arrière du carénage.

Le plancher de protection thermique présente ainsi une forme effilée pouvant être semblable au profil d'ensemble du carénage, qui est de préférence effilé pour des raisons d'aérodynamisme, d'une manière connue en soi.

Dans le mode de réalisation préféré de l'invention, chaque gorge latérale est formée dans le chant d'un rebord formé à une extrémité d'un panneau latéral correspondant appartenant à ladite structure de caisson, tandis que la languette latérale correspondante s'étend en saillie depuis un chant dudit plancher.

Chaque gorge latérale est donc solidaire du panneau latéral correspondant, auquel cas le premier élément précité est constitué par la structure de caisson du plancher, tandis que chaque languette est solidaire du plancher, qui constitue donc le second élément précité.

Avantageusement, chaque languette latérale desdits moyens de liaison comporte au moins un orifice traversé avec jeu par un élément de retenue correspondant solidaire dudit premier élément parmi la structure de caisson et le plancher, de manière à autoriser ledit déplacement relatif en translation du bord latéral correspondant du plancher par rapport à la structure de caisson selon la direction principale de glissière précitée.

L'invention concerne également un mât d'accrochage pour ensemble propulsif d'aéronef, comprenant un carénage aérodynamique arrière du type décrit ci-dessus.

L'invention concerne aussi un ensemble propulsif pour aéronef, comportant un turbomoteur ainsi qu'un mât d'accrochage du type décrit ci-dessus destiné à l'accrochage de ce turbomoteur à la voilure ou au fuselage d'un aéronef.

L'invention concerne encore un aéronef comprenant un ensemble propulsif du type décrit ci-dessus.

L'invention concerne enfin un procédé d'assemblage d'un carénage aérodynamique arrière du type décrit ci-dessus, caractérisé en ce qu'il comprend les étapes consistant à :
- positionner ledit plancher de protection thermique devant ladite structure de caisson du carénage en amenant chaque languette latérale desdits moyens de liaison en regard de ladite gorge latérale correspondante ;
- déplacer le plancher en translation vers l'avant par rapport à la structure de caisson, en engageant puis en faisant glisser chaque languette latérale dans la gorge latérale correspondante, jusqu'à ce que le plancher atteigne une position nominale.

Outre les avantages décrits ci-dessus en relation avec le carénage, ce procédé présente l'avantage d'être particulièrement simple à mettre en oeuvre.

Ce procédé comporte de préférence une étape ultérieure consistant à activer des moyens de retenue longitudinale du plancher dans sa position nominale.

En variante ou de manière complémentaire, ce procédé peut comporter une étape ultérieure consistant, pour chaque languette latérale des moyens de liaison, à engager avec jeu selon un plan comprenant ladite direction principale de glissière correspondante et ladite direction longitudinale du plancher, au moins un élément de retenue solidaire dudit second élément parmi la structure de caisson et le plancher, dans un orifice traversant ménagé dans ladite languette latérale.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- les figure 1 et 2 sont des vues schématiques partielles de côté d'un ensemble propulsif pour aéronef selon un premier mode de réalisation préféré de la présente invention ;
- la figure 3 est une demi-vue partielle en coupe transversale d'un carénage aérodynamique arrière de l'ensemble propulsif des figures 1 et 2 ;
- la figure 3a est une vue à plus grande échelle du détail IIIa de la figure 3 ;
- la figure 4 est une vue semblable à la figure 3a, d'un carénage aérodynamique arrière d'un ensemble propulsif pour aéronef selon un deuxième mode de réalisation préféré de la présente invention.

Dans l'ensemble de ces figures, des références identiques peuvent désigner des éléments identiques ou analogues.

### EXPOSÉ DÉTAILLÉ DE MODES DE RÉALISATION PREFERES

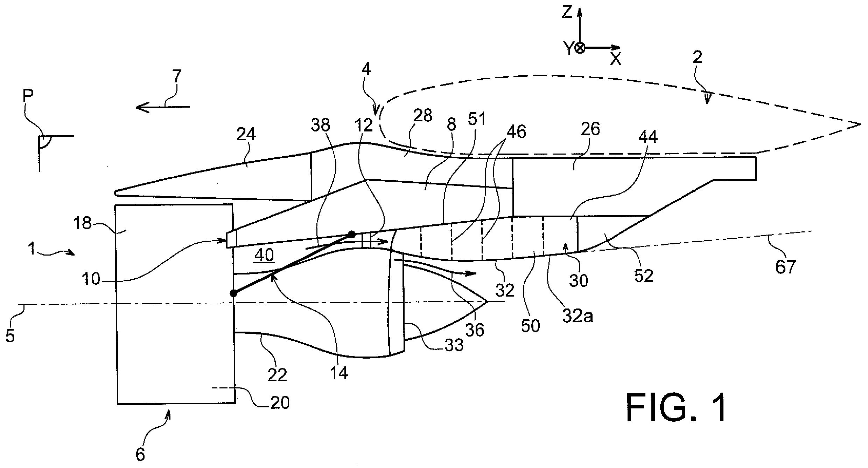

La figure 1 illustre un ensemble propulsif 1 pour aéronef selon un premier mode de réalisation préféré de la présente invention, destiné à être fixé sous une aile 2 d'aéronef, cet ensemble propulsif 1 comportant un mât d'accrochage 4, ainsi qu'un turboréacteur à double flux 6 accroché sous ce mât d'accrochage 4.

Globalement, le mât d'accrochage 4 comporte une structure rigide 8, également appelée structure primaire, portant des moyens d'accrochage du moteur 6, ces moyens d'accrochage disposant d'une pluralité d'attaches moteur 10, 12, ainsi que d'un dispositif 14 de reprise des efforts de poussée générés par le turboréacteur 6.

Le mât d'accrochage 4 comporte une autre série d'attaches (non représentées) rapportées sur la structure rigide 8 et permettant d'assurer la suspension de cet ensemble propulsif 1 sous l'aile 2 de l'aéronef.

Par ailleurs, l'ensemble propulsif 1 est destiné à être entouré d'une nacelle (non visible sur la figure 1).

Dans toute la description suit, par convention, on appelle X la direction longitudinale du mât d'accrochage 4 qui est également assimilable à la direction longitudinale du turboréacteur 6 et à celle du carénage aérodynamique arrière inférieur qui sera présenté ci-après, cette direction X étant parallèle à un axe longitudinal 5 de ce turboréacteur 6. D'autre part, on appelle Y la direction orientée transversalement par rapport au mât d'accrochage 4 et également assimilable à la direction transversale du turboréacteur 6 et à celle du carénage aérodynamique arrière inférieur, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef lors du fonctionnement du turboréacteur 6, cette direction étant représentée schématiquement par la flèche 7.

Sur la figure 1, on peut donc voir les deux attaches moteur 10, 12, le dispositif de reprise des efforts de poussée 14, la structure rigide 8 du mât d'accrochage 4, ainsi qu'une pluralité de structures secondaires rapportées sur la structure rigide 8. Ces structures secondaires assurant la ségrégation et le maintien des systèmes tout en supportant des éléments de carénage aérodynamique seront décrites ci-après.

Il est indiqué que le turboréacteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur. Les carters 18 et 22 sont bien entendu solidaires l'un de l'autre.

La structure rigide 8 du mât d'accrochage 4 prend la forme d'un caisson s'étendant de l'arrière vers l'avant, sensiblement selon la direction X, pourvu de nervures transversales (non représentées) prenant chacune la forme d'un rectangle orienté dans un plan YZ.

Les moyens d'accrochage comportent tout d'abord une attache moteur avant 10 interposée entre une extrémité avant de la structure rigide 8 également appelée pyramide, et une partie supérieure du carter de soufflante 18.

D'autre part, une attache moteur arrière 12 est interposée entre la structure rigide 8 et le carter central 22.

Toujours en référence à la figure 1, on compte parmi les structures secondaires du mât 4 une structure aérodynamique avant 24, une structure aérodynamique arrière 26, un carénage de raccordement 28 des structures aérodynamiques avant et arrière, et un carénage aérodynamique arrière inférieur 30.

La structure aérodynamique avant 24 est placée dans le prolongement avant inférieur de la voilure 2 et au-dessus de la structure primaire 8. Elle est montée fixement sur la structure rigide 8, et présente une fonction de profil aérodynamique entre une partie supérieure de capots de soufflante articulés sur cette structure aérodynamique avant 24, et le bord d'attaque de la voilure. Cette structure aérodynamique avant 24 dispose non seulement d'une fonction de carénage aérodynamique, mais elle permet également la mise en place, la ségrégation et le cheminement de différents systèmes (air, électrique, hydraulique, carburant). De plus, la partie avant de cette structure avant 24 n'étant pas au contact de la structure rigide 8, il est habituellement interposé un échangeur thermique dans l'espace défini entre ces deux éléments.

Directement dans le prolongement arrière de cette structure avant 24, toujours sous la voilure et monté au-dessus de la structure rigide 8, se trouve le carénage de raccordement 28, également appelé « karman ».

Ensuite, toujours vers l'arrière, le carénage de raccordement 28 est prolongé par la structure aérodynamique arrière 26, dite *RSS* (de l'anglais « *Rear Secondary Structure* »), qui contient une partie des équipements du mât. Cette structure arrière 26 est de préférence située entièrement en arrière par rapport à la structure rigide 8, et est donc attachée sous la voilure de l'aéronef.

Enfin, sous la structure rigide 8 et la structure aérodynamique arrière 26, se trouve le carénage aérodynamique arrière inférieur 30, également appelé « bouclier » ou *« Aft Pylon Fairing ».* Ses fonctions essentielles sont la formation d'une barrière thermique également dite anti-feu servant à protéger le mât et la voilure de la chaleur dégagée par le flux primaire, et la formation d'une continuité aérodynamique entre la sortie du moteur et le mât d'accrochage.

De manière connue de l'homme du métier, le carénage aérodynamique arrière inférieur 30 précité comporte un plancher de protection thermique 32 pourvu d'une surface extérieure 32a destinée à être épousée par un flux primaire du moteur qu'il délimite partiellement radialement vers l'extérieur par rapport à l'axe 5 du turboréacteur. Ce flux primaire, représenté schématiquement par la flèche 36, est formé de gaz de combustion chauds s'échappant d'une tuyère 33 du moteur.

Il est à noter que dans l'exemple décrit ici dans lequel le turboréacteur 6 est destiné à être suspendu sous la voilure de l'aéronef, le plancher 32 de protection thermique constitue une portion inférieure du carénage 30, tandis qu'un longeron de fermeture 51, opposé au plancher 32, constitue une portion supérieure de ce carénage 30 (figure 1). Naturellement, la situation de ces deux éléments 32, 51 serait inversée dans le cas alternatif où le turboréacteur serait destiné à être implanté au-dessus de la voilure. D'ailleurs, il est noté que dans ce cas alternatif couvert par la présente invention, le carénage 30 deviendrait un carénage aérodynamique arrière supérieur. Par ailleurs, la partie supérieure du caisson peut en variante être dépourvue de longeron de fermeture, et seulement obturée par les éléments 8, 26 directement adjacents selon la direction Z.

Toujours de manière connue, le carénage aérodynamique arrière inférieur 30 est monté sur la structure aérodynamique arrière 26 et la structure rigide 8 (figure 1).

Ce carénage aérodynamique arrière 30 présente globalement un plan de symétrie P correspondant à un plan XZ, ce plan P constituant également un plan vertical de symétrie pour l'ensemble du mât d'accrochage 4, et pour le moteur 6.

Par ailleurs, le carénage 30 comporte aussi deux panneaux latéraux 44 qui sont quant à eux prévus pour être épousés extérieurement par un flux secondaire du moteur représenté schématiquement par la flèche 38, en raison de leur implantation dans le canal annulaire 40 de flux secondaire du moteur (figure 1) et/ou en sortie de celui-ci.

Les deux panneaux latéraux 44 du carénage 30 sont grossièrement orientés dans un plan XZ et disposés de part et d'autre du plan de symétrie P. Ils sont assemblés entre eux par des nervures intérieures transversales de rigidification 46 espacées les unes des autres selon la direction X, chacune de ces nervures 46 étant orientée selon un plan YZ et prenant par exemple la forme d'un rectangle ou d'un carré.

L'ensemble formé par les nervures transversales 46 et les panneaux latéraux 44 du carénage 30 constitue une structure de caisson, dans la terminologie de la présente invention.

Les panneaux latéraux 44 sont montés fixement et directement sur des portions latérales de chacune des nervures intérieures 46, à l'aide de moyens conventionnels connus de l'homme du métier.

Toujours en référence à la figure 1, on peut apercevoir que le carénage 30 se décompose en deux portions distinctes mais solidaires l'une de l'autre, à savoir une portion avant 50 constituant la majeure partie du carénage, par exemple 60 à 85 % de celui-ci en terme de longueur selon la direction X, et une portion arrière 52 plus réduite prenant globalement la forme d'une pyramide ou d'une pointe dont la base est reliée rigidement à la portion avant 50, et dont le sommet constitue une extrémité arrière du carénage 30.

Dans le mode de réalisation préféré qui est illustré sur les figures, la portion avant 50 présente une étendue transversale se réduisant de l'avant vers l'arrière du carénage 30.

Les panneaux latéraux 44 et le longeron de fermeture 51 s'étendent de préférence chacun d'une seule pièce d'un bout à l'autre du carénage 30, c'est-à-dire à la fois le long de la portion avant 50, et le long de la portion arrière 52. En revanche, le plancher de protection thermique 32 s'étend lui de préférence d'une seule pièce uniquement sur la portion avant 50, et non sur la portion arrière 52, même si cela pourrait bien entendu être envisagé, sans sortir du cadre de l'invention. Cette particularité s'explique notamment par le fait que la portion arrière 52 en forme de pyramide s'éloigne progressivement de l'axe du moteur, de sorte que le flux primaire, qui perd de toute façon en intensité de chaleur en allant vers l'arrière, induit un impact thermique moindre sur la portion arrière 52.

Le fait de prévoir chacun des éléments mentionnés ci-dessus d'une seule pièce n'exclut pas la possibilité de les fabriquer à l'aide de plusieurs portions distinctes rapportées fixement les unes aux autres, comme par exemple plusieurs portions se succédant selon la direction X et/ou selon la direction Z. Cela vaut également pour les éléments suivants qui seront décrits comme étant susceptibles d'être fabriqués d'une seule pièce.

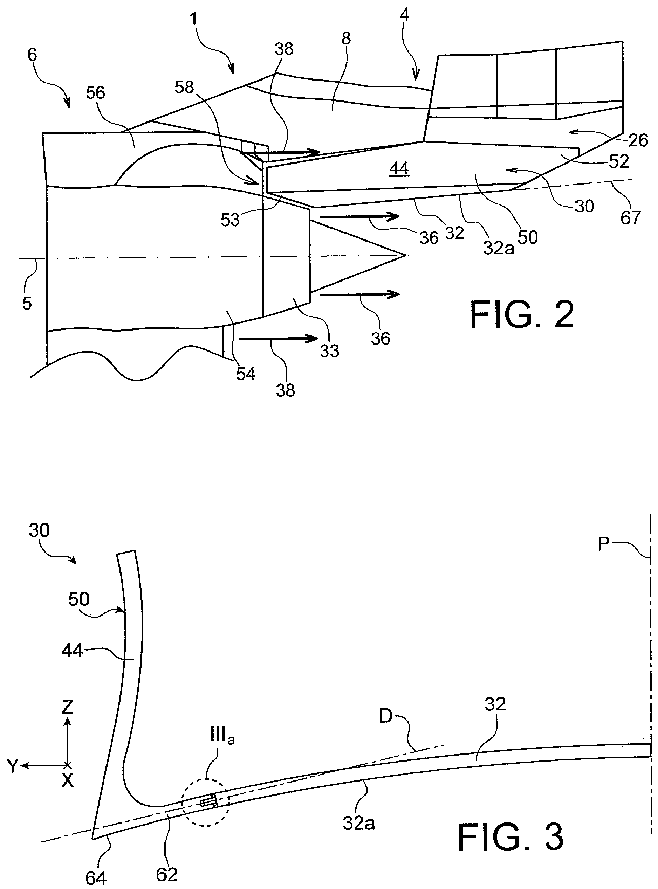

La figure 2 illustre à plus grande échelle une partie arrière de l'ensemble propulsif 1, y compris une partie interne de la nacelle de cette ensemble 1, cette partie interne comprenant une enveloppe annulaire interne 54, parfois dénommée *IFS* (de l'anglais *« Inner Fan Structure* »), destinée à délimiter intérieurement le canal 40 de flux secondaire, ainsi que deux parois longitudinales de bifurcation 56, dont l'une seulement est visible sur la figure 2, qui sont raccordées à l'enveloppe interne 54 et destinées à guider le flux secondaire 38 autour de certaines parties du mât d'accrochage 4 qui traversent le canal 40 de flux secondaire, telle qu'une partie avant de la structure rigide 8 ainsi que les attaches moteur 10 et 12.

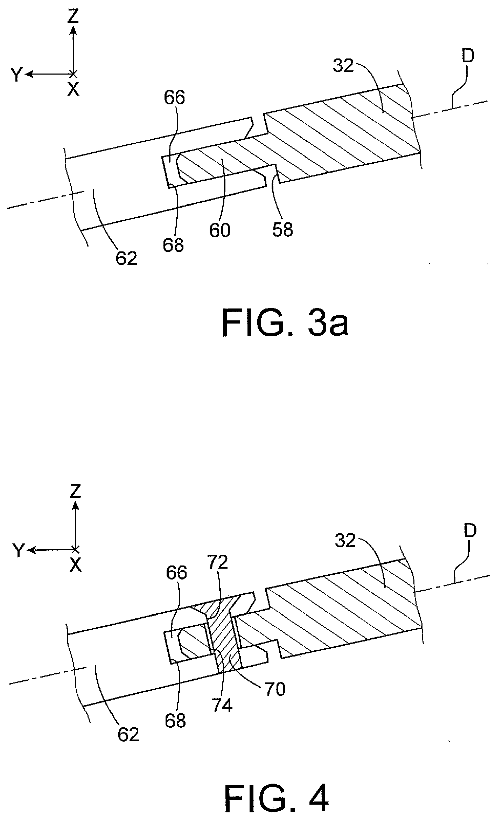

Selon une caractéristique de l'invention illustrée par les figures 3 et 3a, le plancher de protection thermique 32 prend globalement la forme d'une plaque incurvée selon la direction transversale Y, présentant deux bords latéraux opposés 58 pourvus chacun d'une languette latérale 60 (figure 3a) s'étendant en saillie depuis le chant du bord 58 précité.

La figure 3 représente globalement une moitié inférieure du carénage 30. L'autre moitié de ce carénage 30 peut bien entendu se déduire globalement de cette figure par une simple symétrie selon le plan P de la figure 1.

Chaque panneau latéral 44 du carénage aérodynamique arrière 30 présente un rebord 62 ou ressaut (figure 3) s'étendant depuis une extrémité inférieure 64 du panneau 44, globalement en direction du panneau latéral 44 opposé de ce carénage 30.

Le rebord 62 de chaque panneau latéral 44 comporte une gorge latérale 66 (figure 3a) s'étendant longitudinalement de l'une à l'autre des extrémités longitudinales de la partie avant 50 du carénage 30. Chaque gorge latérale 66 débouche globalement en direction du panneau latéral 44 opposé, sur toute son étendue longitudinale, et est ouverte vers l'avant et vers l'arrière respectivement au niveau de ses deux extrémités longitudinales.

Comme cela apparaît plus clairement sur la figure 3a, chaque languette latérale 60 est engagée avec un jeu latéral dans la gorge latérale 66 située du même côté, de manière à constituer une liaison glissière entre le plancher 32 et les panneaux latéraux 44. Cette liaison glissière est orientée grossièrement en direction du panneau latéral 44 opposé, et donc selon une direction D s'inscrivant dans un plan YZ orthogonal à la direction longitudinale X du carénage. Cette direction D constitue la direction principale de glissière, selon la terminologie de la présente invention.

D'une manière générale, il apparaît ainsi que les languettes latérales 60 et les gorges latérales 66 forment des moyens de liaison des bords 58 du plancher de protection thermique 32 aux panneaux latéraux 44, et constituent ainsi des moyens de support du plancher 32 à la structure de caisson du carénage 30.

Le jeu de montage de chaque languette 60 dans la gorge 66 correspondante selon la direction principale de glissière D autorise des déformations transversales relatives entre le plancher 32 et la structure de caisson du carénage 30, notamment les déformations résultant de dilatations différentielles de ces éléments.

Par ailleurs, le plancher 32 est évasé en direction de l'arrière, c'est-à-dire que les bords latéraux 58 de ce plancher se rapprochent mutuellement en direction de l'arrière. Cette forme du plancher 32 découle du fait que le carénage aérodynamique arrière 30 dans son ensemble est de forme effilée vers l'arrière pour des raisons d'aérodynamisme. De manière analogue, les fonds 68 respectifs des gorges latérales 66 se rapprochent également l'un de l'autre en direction de l'arrière, de sorte que le jeu entre les languettes latérales 60 et les fonds 68 correspondants des gorges latérales 66 soit sensiblement constant sur toute l'étendue longitudinale des languettes 60.

Lorsque le plancher 32 est dans sa position nominale, l'engagement des languettes latérales 60 du plancher dans les gorges 66 correspondantes se fait avec un jeu autorisant un déplacement du plancher 32 sur une courte distance en translation vers l'arrière dans un plan comprenant les bords 58 de ce plancher, c'est-à-dire selon la direction longitudinale 67 du plancher (figure 1). Le fond 68 de chaque gorge 66 forme ainsi une butée à l'encontre d'un déplacement du plancher 32 en translation vers l'arrière au-delà de cette courte distance.

Le maintien du plancher selon la direction longitudinale de celui-ci est assuré par des moyens de fixation d'une extrémité avant de ce plancher à la structure de caisson du carénage aérodynamique arrière 30. Ces moyens de fixation permettent en particulier de maintenir le plancher 32 dans sa position nominale en empêchant toute translation globale de ce plancher vers l'arrière.

En variante, le plancher de protection thermique 32 peut être maintenu longitudinalement par des moyens de fixation d'une extrémité arrière de ce plancher à la structure de caisson du carénage aérodynamique arrière 30.

Dans les deux cas, le plancher de protection thermique 32 peut être assemblé à la structure de caisson du carénage 30 simplement en insérant les languettes latérales 60 du plancher 32 dans les gorges latérales 66 par l'extrémité avant de chacune de ces gorges, puis en poussant le plancher 32 vers l'arrière jusqu'à sa position nominale, et enfin en fixant l'une de ses extrémités longitudinales à la structure de caisson du carénage aérodynamique arrière 30.

La figure 4 illustre un deuxième mode de réalisation préféré de l'invention, dans lequel le carénage aérodynamique arrière 30 est semblable à celui décrit ci-dessus, mais comporte en outre des éléments de retenue 70, prenant par exemple la forme de vis, qui traversent respectivement des premiers orifices 72 traversant chaque rebord 62 du panneau 44 et débouchant dans la gorge 66 correspondante, ainsi que des seconds orifices 74 ménagés au sein de chaque languette latérale 60 et alignés chacun avec un premier orifice 72 correspondant.

Les premiers orifices 72 sont d'un diamètre sensiblement égal au diamètre des éléments de retenue 70 de manière à permettre un ajustement serré de ces éléments dans ces premiers orifices, tandis que les seconds orifices 74 sont d'un diamètre supérieur à celui des éléments de retenue 70, de sorte qu'il y a un jeu entre chacun de ces éléments et la languette latérale 60 correspondante.

Comme le montre la figure 4, chaque premier orifice comporte une fraisure coopérant avec une tête de l'élément de retenue 70 correspondant pour le centrage de ce dernier dans le second orifice 74 correspondant.

Les éléments de retenue 70 constituent ainsi une sécurité supplémentaire contre tout risque de désengagement des moyens de support du plancher 32 suite à un déplacement de ce dernier en translation.

## Revendications

1. Carénage aérodynamique arrière (30) pour mât d'accrochage (4) d'ensemble propulsif (1) d'aéronef, comprenant une structure de caisson (44, 46), un plancher de protection thermique (32) pourvu d'une surface extérieure (32a) destinée à être épousée par un flux de gaz de combustion (36) issu d'un turbomoteur (6) dudit ensemble propulsif, ainsi que des moyens de support de ce plancher qui comprennent des moyens (60, 66, 70) de liaison de deux bords latéraux (58) de ce plancher (32) à la structure de caisson, ledit carénage étant **caractérisé en ce que** lesdits moyens de liaison de chaque bord latéral (58) du plancher (32) sont configurés de manière à autoriser un déplacement relatif en translation dudit bord latéral (58) du plancher par rapport à la structure de caisson (44, 46) selon une direction (D) correspondante s'inscrivant dans un plan (YZ) orthogonal à une direction longitudinale (X) du carénage.

2. Carénage aérodynamique arrière selon la revendication 1, dans lequel lesdits moyens de liaison (60, 66, 70) sont configurés de manière à autoriser en outre un déplacement relatif en translation de chacun desdits bords latéraux (58) du plancher par rapport à la structure de caisson (44, 46) selon une direction longitudinale (67) du plancher.

3. Carénage aérodynamique arrière selon la revendication 1 ou 2, dans lequel lesdits moyens de liaison (60, 66, 70) de chaque bord latéral du plancher comprennent une gorge latérale correspondante (66) solidaire d'un premier élément (44) parmi la structure de caisson (44, 46) et le plancher (32) et s'étendant de l'avant vers l'arrière le long de ce premier élément en étant ouverte dans ladite direction correspondante (D) s'inscrivant dans le plan orthogonal (YZ) à la direction longitudinale (X) du carénage (30), ainsi qu'une languette latérale correspondante (60) solidaire du second élément (32) parmi la structure de caisson (44, 46) et le plancher (32), et s'étendant de l'avant vers l'arrière le long de ce second élément en étant engagée dans la gorge correspondante (66) de manière à assurer le support dudit plancher (32).

4. Carénage aérodynamique arrière selon la revendication 3, dans lequel l'étendue transversale dudit plancher (32), ainsi que l'écartement entre des fonds (68) respectifs des deux gorges latérales (66) appartenant respectivement aux moyens de liaison desdits bords (58) du plancher, se réduisent de l'avant vers l'arrière du carénage (30).

5. Carénage aérodynamique arrière selon la revendication 3 ou 4, dans lequel chaque languette latérale (60) desdits moyens de liaison comporte au moins un orifice (74) traversé avec jeu par un élément de retenue (70) correspondant solidaire dudit premier élément (44) parmi la structure de caisson (44, 46) et le plancher (32), de manière à autoriser ledit déplacement relatif en translation du bord latéral (58) correspondant du plancher par rapport à la structure de caisson selon la direction (D) correspondante s'inscrivant dans le plan (YZ) orthogonal à la direction longitudinale (X) du carénage.

6. Mât d'accrochage (4) pour ensemble propulsif d'aéronef, comprenant un carénage aérodynamique arrière (30) selon l'une quelconque des revendications 1 à 5.

7. Ensemble propulsif (1) pour aéronef, comportant un turbomoteur (6) ainsi qu'un mât d'accrochage (4) selon la revendication 6 destiné à l'accrochage de ce turbomoteur (6) à la voilure (2) ou au fuselage d'un aéronef.

8. Aéronef comprenant un ensemble propulsif selon la revendication 7.

9. Procédé d'assemblage d'un carénage aérodynamique arrière (30) selon l'une quelconque des revendications 3 à 5, **caractérisé en ce qu'**il comprend les étapes consistant à :
- positionner ledit plancher de protection thermique (32) devant ladite structure de caisson (44, 46) du carénage (30) en amenant chaque languette latérale (60) desdits moyens de liaison en regard de ladite gorge latérale correspondante (66) ;
- déplacer ledit plancher (32) en translation vers l'avant par rapport à ladite structure de caisson, en engageant puis en faisant glisser chaque languette latérale (60) dans ladite gorge latérale correspondante (66), jusqu'à ce que le plancher atteigne une position nominale.

## Patentansprüche

1. Aerodynamische Heckverkleidung (30) für ein Aufhängungssystem (4) einer Antriebseinheit (1) eines Luftfahrzeugs, die eine Kastenstruktur (44, 46), einen Wärmeschutzboden (32) mit einer Außenfläche (32a), die dazu bestimmt ist, dass ein von einem Turbomotor (6) der Antriebseinheit stammender Verbrennungsgasstrom (36) sich an sie anpasst, sowie Stützeinrichtungen dieses Bodens enthält, die Verbindungseinrichtungen (60, 66, 70) von zwei Seitenrändern (58) dieses Bodens (32) mit der Kastenstruktur enthalten, wobei die Verkleidung **dadurch gekennzeichnet ist, dass** die Verbindungseinrichtungen jedes seitlichen Rands (58) des Bodens (32) so konfiguriert sind, dass sie eine relative Translationsverschiebung des Seitenrands (58) des Bodens bezüglich der Kastenstruktur (44, 46) in einer entsprechenden Richtung (D) erlauben, die in einer Ebene (YZ) orthogonal zu einer Längsrichtung (X) der Verkleidung liegt.

2. Aerodynamische Heckverkleidung nach Anspruch 1, wobei die Verbindungseinrichtungen (60, 66, 70) so konfiguriert sind, dass sie außerdem eine relative Translationsverschiebung jedes der Seitenränder (58) des Bodens bezüglich der Kastenstruktur (44, 46) gemäß einer Längsrichtung (67) des Bodens erlauben.

3. Aerodynamische Heckverkleidung nach Anspruch 1 oder 2, wobei die Verbindungseinrichtungen (60, 66, 70) jedes Seitenrands des Bodens eine entsprechende seitliche Rille (66), die fest mit einem ersten Element (44) von der Kastenstruktur (44, 46) und dem Boden (32) verbunden ist und sich von vorne nach hinten entlang dieses ersten Elements erstreckt, indem sie in der entsprechenden Richtung (D) offen ist, die in der orthogonalen Ebene (YZ) zur Längsrichtung (X) der Verkleidung (30) liegt, sowie eine entsprechende seitliche Zunge (60) enthalten, die fest mit dem zweiten Element (32) von der Kastenstruktur (44, 46) und dem Boden (32) verbunden ist und sich von vorne nach hinten entlang dieses zweiten Elements erstreckt, indem sie in die entsprechende Rille (66) eingefügt ist, um den Halt des Bodens (32) zu gewährleisten.

4. Aerodynamische Heckverkleidung nach Anspruch 3, wobei die Querausdehnung des Bodens (32) sowie der Abstand zwischen jeweiligen Gründen (68) der zwei seitlichen Rillen (66), die je zu den Verbindungseinrichtungen der Ränder (58) des Bodens gehören, sich von vorne nach hinten der Verkleidung (30) verringern.

5. Aerodynamische Heckverkleidung nach Anspruch 3 oder 4, wobei jede seitliche Zunge (60) der Verbindungseinrichtungen mindestens eine Öffnung (74) aufweist, die mit Spiel von einem entsprechenden Halteelement (70) durchquert wird, das fest mit dem ersten Element (44) von der Kastenstruktur (44, 46) und dem Boden (32) verbunden ist, um die relative Translationsverschiebung des entsprechenden Seitenrands (58) des Bodens bezüglich der Kastenstruktur gemäß der entsprechenden Richtung (D) zu erlauben, die in der Ebene (YZ) orthogonal zur Längsrichtung (X) der Verkleidung liegt.

6. Aufhängungssystem (4) für eine Luftfahrzeug-Antriebseinheit, das eine aerodynamische Heckverkleidung (30) nach einem der Ansprüche 1 bis 5 enthält.

7. Antriebseinheit (1) für ein Luftfahrzeug, die einen Turbomotor (6) sowie ein Aufhängungssystem (4) nach Anspruch 6 aufweist, das für die Aufhängung des Turbomotors (6) an der Tragfläche (2) oder am Rumpf eines Luftfahrzeug bestimmt ist.

8. Luftfahrzeug, das eine Antriebseinheit nach Anspruch 7 enthält.

9. Verfahren zum Zusammenbau einer aerodynamischen Heckverkleidung (30) nach einem der Ansprüche 3 bis 5, **dadurch gekennzeichnet, dass** es die Schritte enthält, die darin bestehen:
- den Wärmeschutzboden (32) vor der Kastenstruktur (44, 46) der Verkleidung (30) zu positionieren, indem jede seitliche Zunge (60) der Verbindungseinrichtungen vor die entsprechende seitliche Rille (66) gebracht wird;
- den Boden (32) bezüglich der Kastenstruktur translatorisch nach vorne zu verschieben, indem jede seitliche Zunge (60) in die entsprechende seitliche Rille (66) eingeführt und darin verschoben wird, bis der Boden eine Nennstellung erreicht.

## Claims

1. An aft aerodynamic fairing (30) for a pylon (4) for attaching an aircraft propelling assembly (1), including a caisson structure (44, 46), a heat-shield floor (32) provided with an external surface (32a) such that a combustion gas flow (36) from a turbine engine (6) of said propelling assembly conforms to the shape thereof, as well as means for supporting this floor comprising linking means (60, 66, 70) for linking two side edges (58) of this floor (32) to the caisson structure, said fairing being **characterised in that** said linking means of each side edge (58) of the floor (32) are configured so as to allow travelling motion of said side edge (58) of the floor relative to the caisson structure (44, 46) in a corresponding direction (D) included in a plane (YZ) orthogonal to a longitudinal direction (X) of the fairing.

2. The aft aerodynamic fairing according to claim 1, wherein said linking means (60, 66, 70) are configured so as to further allow travelling motion of each of said side edges (58) of the floor relative to the caisson structure (44, 46) in a longitudinal direction (67) of the floor.

3. The aft aerodynamic fairing according to claim 1 or 2, wherein said linking means (60, 66, 70) of each side edge of the floor comprise a corresponding side groove (66) integral with a first element (44) among the caisson structure (44, 46) and the floor (32) and extending from the front to the rear along this first element by being opened in said corresponding direction (D) included in the plane (YZ) orthogonal to the longitudinal direction (X) of the fairing (30), as well as a corresponding side tab (60) integral with the second element (32) among the caisson structure (44, 46) and the floor (32), and extending from the front to the rear along this second element and being engaged in the corresponding groove (66) so as to provide for support of said floor (32).

4. The aft aerodynamic fairing according to claim 3, wherein the transverse extent of said floor (32), as well as the gap between respective bottoms (68) of the two side grooves (66) belonging to the linking means of said edges (58) of the floor respectively, are reduced from the front to the rear of the fairing (30).

5. The aft aerodynamic fairing according to claim 3 or 4, wherein each side tab (60) of said linking means includes at least one port (74) through which a corresponding retainer element (70) integral with said first element (44) among the caisson structure (44, 46) and the floor (32) loosely passes, so as to allow said travelling motion of the corresponding side edge (58) of the floor relative to the caisson structure in the corresponding direction (D) included in the plane (YZ) orthogonal to the longitudinal direction (X) of the fairing.

6. An attaching pylon (4) for an aircraft propelling assembly, comprising an aft aerodynamic fairing (30) according to any of claims 1 to 5.

7. A propelling assembly (1) for an aircraft, including a turbine engine (6) as well as an attaching pylon (4) according to claim 6 intended to attach this turbine engine (6) to the aerofoil (2) or to the fuselage of an aircraft.

8. An aircraft comprising a propelling assembly according to claim 7.

9. A method for assembling an aft aerodynamic fairing (30) according to any of claims 3 to 5, **characterised in that** it comprises the steps of:
- positioning said heat-shield floor (32) in front of said caisson structure (44, 46) of the fairing (30) by bringing each side tab (60) of said linking means facing said corresponding side groove (66);
- moving said floor (32) in travelling motion to the front relative to said caisson structure, by engaging and then sliding each side tab (60) in said corresponding side groove (66), until the floor reaches a nominal position.
